# EUROPÄISCHE PATENTSCHRIFT

(11) **EP 3 234 390 B1**
(45) Veröffentlichungstag und Bekanntmachung des Hinweises auf die Patenterteilung: **09.01.2019**
(21) Anmeldenummer: 15813343.9
(22) Anmeldetag: 15.12.2015
(51) Int. Cl.: F16D 7/04, F16D 43/202, F16H 35/10, F16H 55/36

(54) **VORRICHTUNG ZUR ÜBERTRAGUNG EINES DREHMOMENTES VON EINEM VERBRENNUNGSMOTOR ZU EINEM NEBENAGGREGAT**
DEVICE FOR TRANSMITTING A TORQUE FROM AN INTERNAL COMBUSTION ENGINE TO AN AUXILIARY UNIT
DISPOSITIF DE TRANSMISSION D'UN COUPLE D'UN MOTEUR À COMBUSTION INTERNE VERS UN GROUPE AUXILIAIRE

(30) Priorität: 16.12.2014 DE 102014118700
(43) Veröffentlichungstag der Anmeldung: 25.10.2017
(73) Patentinhaber: Winkelmann Powertrain Components GmbH + Co. KG, 59227 Ahlen (DE)
(72) Erfinder: GERSMANN, Daniel, 59320 Enniger (DE); GÖTTMANN, Alexander, 48159 Münster (DE)
(74) Vertreter: Meinke, Jochen
(86) Internationale Anmeldenummer: PCT/EP2015/079874
(87) Internationale Veröffentlichungsnummer: WO 2016/096909

(56) Entgegenhaltungen:
- EP-A2- 1 106 854
- JP-A- 2000 352 428
- JP-U- S59 150 025
- US-A- 3 192 740

## Beschreibung

Die Erfindung betrifft eine Vorrichtung zur Übertragung eines Drehmomentes von einem Verbrennungsmotor zu einem Nebenaggregat, insbesondere einem Kompressor einer Klimaanlage eines Kraftfahrzeuges, mit einer Nebenaggregatwelle und einer drehbar auf dem Nebenaggregatgehäuse angeordneten Riemenscheibe, wobei die Riemenscheibe und die Nebenaggregatwelle über eine Überlastsicherung miteinander verbunden sind, wobei die Überlastsicherung derart ausgebildet ist, dass die Verbindung zwischen der Riemenscheibe und der Nebenaggregatwelle bei Überschreiten eines vorgegebenen Drehmomentes unterbrochen wird, wobei die Überlastsicherung eine Federscheibe mit mehreren Federarmen aufweist, welche endseitig bis zum Erreichen des vorgegebenen Drehmomentes drehfest mit Verbindungselementen eines scheibenförmigen Mitnehmers verbunden sind.

Bei mit einer Klimaanlage ausgerüsteten Kraftfahrzeugen wird üblicherweise der Kompressor der Klimaanlage über einen Riementrieb von der Kurbelwelle des Verbrennungsmotors angetrieben. Beim Ausfall des Kompressors der Klimaanlage hat dies zur Folge, dass der gesamte Riementrieb des Kraftfahrzeuges blockiert oder beschädigt wird.

Um diesem Mangel abzuhelfen, sind Vorrichtungen bekannt, die im Antriebsstrang zwischen der Riemenscheibe des Kompressors und der Kompressorwelle eine Überlastsicherung aufweisen, welche gewährleistet, dass die Antriebsverbindung zwischen der Riemenscheibe und der Kompressorwelle unterbrochen wird, wenn der Kompressor der Klimaanlage ausfällt. Die Riemenscheibe kann sich dann frei auf dem Kompressorgehäuse drehen, so dass der gesamte Riementrieb des Kraftfahrzeuges nicht blockiert oder beschädigt wird.

Eine Vorrichtung mit den Merkmalen des Oberbegriffes des Patentanspruches 1 ist aus EP 2 722 558 A1 bekannt. Bei dieser Vorrichtung weist die Überlastsicherung eine Federscheibe auf, die drehfest mit der Riemenscheibe verbunden ist, sowie ein Mitnehmerelement, das drehfest mit der Kompressorwelle verbunden ist. Die Federscheibe weist radial nach außen über die eigentliche Scheibe vorstehende und sich in Umfangsrichtung erstreckende Federarme auf, deren Enden zwischen dem Mitnehmerelement und am Mitnehmerelement befestigten Klemmplatten eingeklemmt ist. Wenn das Drehmoment einen vorgegebenen Betrag überschreitet, rutschen die Enden der Federarme aus dieser Klemmverbindung heraus, so dass keine Drehmomentübertragung zwischen der Riemenscheibe und der Kompressorwelle mehr erfolgt und die Riemenscheibe sich frei auf dem Kompressorgehäuse drehen kann.

Der Aufbau dieser Überlastsicherung ist sehr aufwendig, und zwar sowohl im Hinblick auf die Herstellung als auch auf die Montage, da die Überlastsicherung aus einer Mehrzahl von Einzelteilen besteht, nämlich neben dem Federelement und dem Mitnehmerelement den zusätzlichen Klemmplatten sowie nietförmigen Befestigungselementen zur Befestigung der Klemmplatten am Mitnehmerelement. Aus US 2012/0285784 A1 ist eine ähnliche Vorrichtung mit einer Überlastsicherung bekannt, welche jedoch keinen Mitnehmer als eigenes Bauteil aufweist. Vielmehr sind in einem an das Riemenprofil angrenzenden Bereich der Riemenscheibe auf einem gemeinsamen Umfang symmetrisch mehrere Bohrungen angeordnet, in welche schraubenförmige Elemente eingesteckt und mittels einer Kontermutter gesichert sind, wobei die schraubenförmigen Elemente im Kopfbereich außenseitig taschenförmige Aufnahmen aufweisen, in welche jeweils das Ende eines Federarmes einer Federscheibe eingreift. Dabei sind die Aufnahmen und die Enden der Federarme so gestaltet, dass im Überlastfall die Enden der Federarme aus den Aufnahmen herausrutschen können. Der Aufbau dieser Überlastsicherung ist ebenfalls sehr aufwendig und verbesserungswürdig.

Aus EP1106854 A2 ist eine weitere Vorrichtung mit den Merkmalen des Oberbegriffes des Patentanspruchs 1 bekannt.

Aufgabe der Erfindung ist es, eine vorbeschriebene Vorrichtung so zu verbessern, dass ihr Aufbau wesentlich vereinfacht, die Auslegung des Ansprechverhaltens der Überlastsicherung verbessert und Belastungen in Richtung der Drehachse vermieden werden.

Diese Aufgabe wird bei einer Vorrichtung der eingangs bezeichneten Art erfindungsgemäß dadurch gelöst, dass das jeweilige Verbindungselement des Mitnehmers jeweils als taschenförmige Aufnahme im Mitnehmer ausgebildet ist, wobei das Ende des jeweiligen Federarmes unter Federspannung kraftschlüssig an einer Anlagefläche der taschenförmigen Aufnahme anliegt, wobei die jeweilige taschenförmige Aufnahme als aus dem Mitnehmer bereichsweise ausgeschnittener, hakenförmig geformter Steg ausgebildet ist.

Der Aufbau der Überlastsicherung der Vorrichtung ist erfindungsgemäß gegenüber bekannten Vorrichtungen dieser Art wesentlich vereinfacht, die Überlastsicherung besteht im Prinzip nur aus zwei Bauteilen, nämlich der Federscheibe und dem scheibenförmigen Mitnehmer, welche auf einfache Weise z.B. durch Tiefziehen hergestellt werden können. Auch die Montage ist äußerst einfach, da die Federenden der Federscheibe nur entgegen ihrer Federspannung in die taschenförmigen Aufnahmen im Mitnehmer eingeführt werden müssen und diese dann kraftschlüssig an der jeweiligen Anlagefläche der taschenförmigen Aufnahme anliegen. Durch die Abstützung der Federscheibe bzw. ihrer Federarme am Mitnehmer wird keine zusätzliche Last in Richtung der Drehachse übertragen bzw. aufgebaut, so dass die Belastung des Lagers der Riemenscheibe durch die Überlastsicherung nicht erhöht wird. Die taschenförmigen Aufnahmen sind integraler Bestandteil des Mitnehmers, so dass keine zusätzlichen Elemente erforderlich sind, die mit dem Mitnehmer verbunden werden müssten.

In bevorzugter Ausgestaltung ist vorgesehen, dass das Ende des jeweiligen Federarmes und die jeweilige Anlagefläche aufeinander abgestimmte Formelemente aufweisen, wodurch neben der kraftschlüssigen zusätzlich auch noch eine formschlüssige Verbindung geschaffen wird.

Diese Formelemente sind bevorzugt als Ein- oder Auswölbungen ausgebildet, welche beim Herstellvorgang einfach eingeprägt werden können. Die Enden der Federarme sind dadurch auf einfache Weise nicht nur kraftschlüssig, sondern auch formschlüssig am Mitnehmer gehalten, was die Auslegung der Überlastsicherung hinsichtlich ihres Ansprechverhaltens zusätzlich variabler gestaltet.

Nach einer bevorzugten Ausgestaltung ist vorgesehen, dass der Steg der jeweiligen taschenförmigen Aufnahme mit einer zusätzlichen Versteifung versehen ist. Diese Versteifung kann z.B. in den Steg eingeprägt werden. Die taschenförmigen Aufnahmen sind dann weitgehend starr, die für die Wirksamkeit der Überlastsicherung erforderlichen Federeigenschaften werden dann allein durch die Federscheibe und die Federarme bereitgestellt.

Alternativ kann auch vorgesehen sein, dass der jeweilige Steg federnd ausgebildet ist. Dadurch ergibt sich eine weitere Variabilität hinsichtlich der Auslegung des Ansprechverhaltens der Überlastsicherung.

In bevorzugter weiterer Ausgestaltung ist vorgesehen, dass der Mitnehmer umfänglich benachbart zum jeweiligen Steg einen zum zugeordneten Federarm gerichteten und an diesem anliegenden Stützarm aufweist. Durch diesen zusätzlichen Stützarm können einerseits die Federeigenschaften der Federarme beeinflusst werden und andererseits kann sichergestellt werden, dass im Überlastfall die Federarme nicht in Kontakt mit dem Mitnehmer kommen, so dass eine freie Drehbarkeit der Bauteile gewährleistet ist.

In bevorzugter Ausgestaltung ist dabei vorgesehen, dass der jeweilige Stützarm als aus dem Mitnehmer bereichsweise ausgeschnittener Steg ausgebildet ist. Der jeweilige Stützarm ist dann integraler Bestandteil des Mitnehmers, es sind keine zusätzlichen Bauteile erforderlich. Der jeweilige Stützarm ist dabei bevorzugt am freien Ende abgewinkelt, um eine größere Anlagefläche an den jeweiligen Federarm zu schaffen. Außerdem kann der jeweilige Stützarm auch mit einer zusätzlichen Versteifung versehen sein.

Ferner ist vorgesehen, dass die Federscheibe wenigstens drei symmetrisch verteilte Federarme aufweist. Diese ragen radial und ggf. tangential über den Umfang der eigentlichen Federscheibe hervor und erstrecken sich in Umfangsrichtung.

Schließlich ist besonders bevorzugt vorgesehen, dass die Federscheibe einen umlaufenden Vorsprung aufweist, der am Mitnehmer anliegt, solange das vorgegebene Drehmoment nicht überschritten wird. Die Federscheibe stützt sich mit dem umlaufenden Vorsprung auf den Mitnehmer ab, wodurch die Federscheibe und der Mitnehmer eine nach außen hin kraftfreie Einheit bilden und Belastungen in Richtung der Drehachse vermieden werden. Bei Überschreiten des vorgegebenen Drehmomentes verformt sich die Feder aufgrund ihrer Federspannung bei Freigabe der Federarme so, dass kein Kontakt mehr mit dem Mitnehmer besteht.

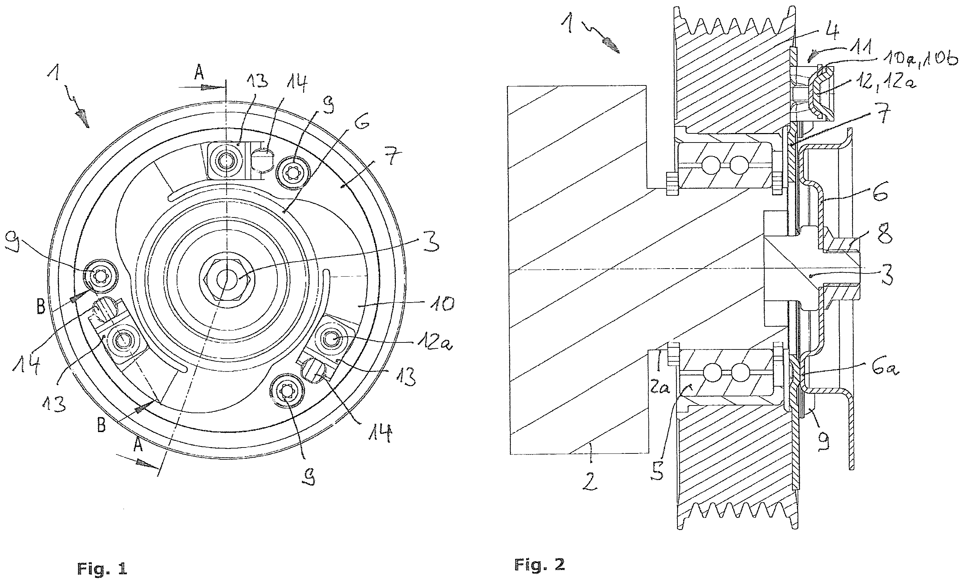

Die Erfindung ist nachstehend anhand der Zeichnung beispielhaft näher erläutert. Diese zeigt in
- Fig. 1: eine Seitenansicht einer erfindungsgemäßen Vorrichtung,
- Fig. 2: einen Schnitt gemäß der Linie A-A in Fig. 1,
- Fig. 3: eine Seitenansicht einer Federscheibe der Vorrichtung,
- Fig. 4: eine Seitenansicht eines Mitnehmers der Vorrichtung,
- Fig. 5: den Schnitt gemäß der Linie A-A in Fig. 1 mit Verdeutlichung der einwirkenden Kräfte,
- Fig. 6: einen Schnitt gemäß der Linie B-B in Fig. 1,
- Fig. 7 bis 10: schematische Darstellungen des Ausrückvorganges der Überlastsicherung vom Ausgangszustand bis zum entkoppelten Zustand,
- Fig. 11: eine perspektivische Ansicht des scheibenförmigen Mitnehmers und der Federscheibe in gekoppeltem Zustand nach einer abgewandelten Ausführungsform und
- Fig. 12: eine Seitenansicht der Fig. 11, teilweise im Schnitt.

Eine Vorrichtung zur Übertragung eines Drehmomentes von einem nicht dargestellten Verbrennungsmotor zu einem Nebenaggregat eines Kraftfahrzeuges ist allgemein mit 1 bezeichnet. Bei dem dargestellten Ausführungsbeispiel ist das Nebenaggregat ein Kompressor einer Klimaanlage, von welchem ein Kompressorgehäuse 2 angedeutet ist. Das Nebenaggregat weist eine Nebenaggregatwelle, also beim Ausführungsbeispiel eine Kompressorwelle 3 auf, die über einen Riementrieb mittels der Vorrichtung 1 angetrieben werden soll. Dieser Riementrieb wird von einer auf der Kurbelwelle des Kraftfahrzeuges angeordneten Riemenscheibe angetrieben, welche über einen nicht dargestellten Riemen mit einer Riemenscheibe 4 der Vorrichtung 1 in Antriebsverbindung steht. Diese Riemenscheibe 4 ist über ein Lager 5 drehbar auf dem Kompressorgehäuse 2 bzw. einem seitlichen Ansatz 2a des Kompressorgehäuses 2 gelagert.

Damit das Drehmoment von der Riemenscheibe 4 auf die Kompressorwelle 3 übertragen werden kann, diese Übertragung aber unterbrochen werden kann, wenn der Kompressor beschädigt ist und sich die Kompressorwelle 3 nicht mehr drehen kann, weist die Vorrichtung 1 im Antriebsstrang zwischen der Riemenscheibe 4 und der Kompressorwelle 3 eine Überlastsicherung auf. Diese Überlastsicherung weist eine Federscheibe 6 und einen scheibenförmigen Mitnehmer 7 auf. Dabei ist beim Ausführungsbeispiel die Federscheibe 6 drehfest mit der Kompressorwelle 3 verbunden. Dazu ist beim Ausführungsbeispiel die Federscheibe 6 auf die Kompressorwelle 3 aufgesteckt und mittels einer Mutter 8 drehfest befestigt. Selbstverständlich ist auch eine andere Art der drehfesten Verbindung zwischen der Federscheibe 6 und der Kompressorwelle 3 möglich. Der scheibenförmige Mitnehmer 7 ist demgegenüber drehfest mit der Riemenscheibe 4 verbunden. Beim Ausführungsbeispiel ist der Mitnehmer 7 mittels auf einem gemeinsamen Radius am Umfang symmetrisch verteilten Schrauben 9 an die Riemenscheibe 4 angeschraubt. Selbstverständlich kann der Mitnehmer 7 auf andere Weise an der Riemenscheibe 4 drehfest befestigt werden, z.B. formschlüssig, wozu der Mitnehmer 7 in bekannter Weise fingerartige Elemente aufweist, die in entsprechende Ausbuchtungen in der Stirnseite der Riemenscheibe 4 eingreifen. Bei einer solchen Ausgestaltung kann in diese formschlüssige Verbindung auch zusätzlich eine Dämpfung aus Elastomerelementen oder dgl. integriert werden, worauf es im Rahmen der Erfindung nicht ankommt.

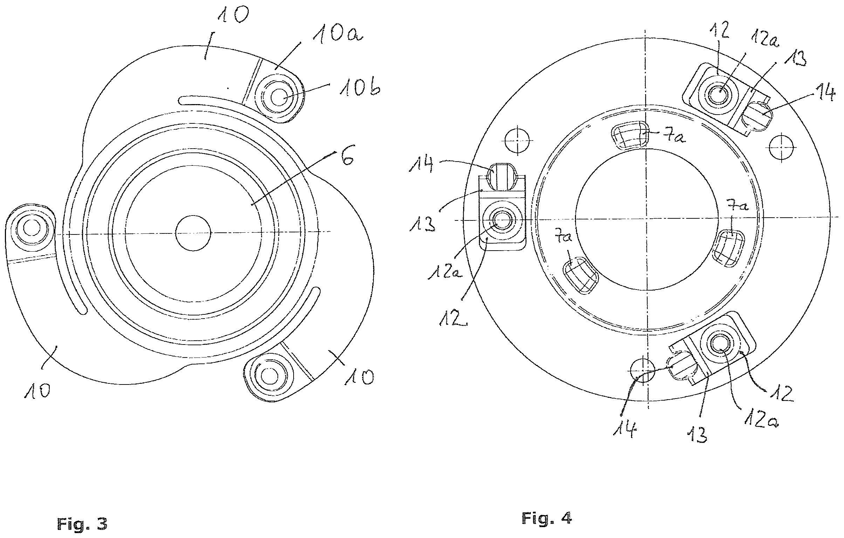

Um eine Kraft- bzw. Drehmomentübertragung vom Mitnehmer 7 auf die Federscheibe 6 und damit von der Riemenscheibe 4 auf die Kompressorwelle 3 zu ermöglichen, weist die Federscheibe 6 beim Ausführungsbeispiel drei Federarme 10 auf, die symmetrisch am Umfang der Federscheibe 6 verteilt angeordnet sind, sich radial außerhalb des Umfangs der eigentlichen Federscheibe 6 erstrecken und in Umfangsrichtung abgewinkelt sind. Diese Federarme 10, die am besten aus Fig. 3 zu erkennen sind, sind zu ihren Enden 10a hin federnd axial versetzt zur eigentlichen Federscheibe 6 in Richtung zum Mitnehmer 7 ausgelenkt. Diese Federarme 10 dienen dazu, eine kraft- und/oder formschlüssige Verbindung mit dem Mitnehmer 7 herzustellen, die bis zu einem vorgegebenen Drehmoment wirksam ist, bei Überschreiten eines vorgegebenen Drehmomentes jedoch aufgehoben wird, so dass die Überlastsicherung wirksam wird. Dazu weist der scheibenförmige Mitnehmer 7 für jedes Federende 10a jeweils an entsprechender Stelle ein Verbindungselement auf, das als taschenförmige Aufnahme 11 ausgebildet ist, wobei die taschenförmige Aufnahme 11 eine Anlagefläche 12 aufweist, die parallel zur Hauptfläche des Mitnehmers 7 ausgerichtet ist.

Das jeweilige Federende 10a greift somit in die jeweilige zugeordnete taschenförmige Aufnahme 11 des Mitnehmers 7 ein und liegt unter Federspannung kraftschlüssig an der Anlagefläche 12 der taschenförmigen Aufnahme 11 an. Solange das zu übertragende Drehmoment nicht zu groß wird, wird dadurch eine Drehmomentübertragung zwischen der Federscheibe 6 und dem Mitnehmer 7 bzw. der Riemenscheibe 4 und der Kompressorwelle 3 möglich. Wird das Drehmoment jedoch zu groß, wenn die Kompressorwelle 3 z.B. blockiert ist, rutschen die Federenden 10a aus den taschenförmigen Aufnahmen 11 in nachfolgend näher beschriebener Weise heraus, so dass die Drehmomentübertragung unterbrochen wird und die Riemenscheibe 4 frei umlaufen kann.

Um neben der reinen kraftschlüssigen Verbindung zwischen den Federenden 10a und der taschenförmige Aufnahme 11 zusätzlich auch noch eine formschlüssige Verbindung zu erreichen, ist bevorzugt vorgesehen, dass das jeweilige Ende 10a des Federarmes 10 und die jeweilige Anlagefläche 12 zueinander komplementär ausgebildete Formelemente aufweisen. Diese Formelemente sind beim Ausführungsbeispiel je nach Betrachtungsrichtung als Ein- oder Auswölbungen 10b, 12a ausgebildet.

Die jeweilige taschenförmige Aufnahme 11 des Mitnehmers 7 ist beim Ausführungsbeispiel jeweils als aus dem Mitnehmer 7 bereichsweise ausgeschnittener, hakenförmiger Steg 13 ausgebildet, welcher freiendseitig die Anlagefläche 12 mit Ein- bzw. Auswölbung 12a bildet. Der hakenförmige Steg 13 weist angrenzend an seiner Anlenkung zum eigentlichen Mitnehmer 7 vorzugsweise eine zusätzliche Versteifung 14 auf, welche bevorzugt als Oberflächenprägung dieses Stegbereiches ausgebildet ist.

Wie sich aus der vorstehenden Beschreibung ergibt, besteht die Überlastsicherung der Vorrichtung 1 im Prinzip nur aus zwei Teilen, nämlich der Federscheibe 6 und dem Mitnehmer 7. Beide Teile werden vor der Montage vorzugsweise zu einer trennbaren Einheit gefügt. Die Endmontage erfolgt durch Aufschieben auf die Kompressorwelle 3 und Anziehen des Verbindungselementes, beim Ausführungsbeispiel der Mutter 8. Alternativ kann die Kompressorwelle 3 natürlich auch eine Innenbohrung mit Innengewinde aufweisen. Zur Befestigung der Federscheibe 6 auf dem Ende der Kompressorwelle 3 wird dann entsprechend keine Mutter 8, sondern eine Befestigungsschraube verwendet. Der Mitnehmer 7, der mit seiner gegenüber der Kompressorwelle 3 größeren Innenbohrung nicht mit der Kompressorwelle 3 verbunden ist, wird mittels der Schrauben 9 an der Riemenscheibe 3 befestigt.

Bei der Vormontage der Überlastsicherung werden die Federscheibe 6 und der Mitnehmer 7 über die Federarme 10 und die taschenförmigen Aufnahmen 11 miteinander verspannt. Dabei erfolgt einerseits eine kraftschlüssige Verbindung durch die federbelastete Auslenkung der Federenden 10a gegen die Anlagenflächen 12 der taschenförmigen Aufnahmen 11 und andererseits zusätzlich eine formschlüssige Verbindung über die Ein- bzw. Auswölbungen 10b, 12a. Die Form dieser Auswölbungen 10b, 12a ist grundsätzlich beliebig, sie sind z.B. kugel-, kegel- oder zylinderförmig. Zur Versteifung der Stege 13 der taschenförmigen Aufnahmen 11 dienen die Versteifungen 14, welcher ein Wegbiegen der Stege 13 verhindern. Beim Verspannen werden die Federarme 10 aus einer neutralen lastfreien Lage in eine gespannte Lage gebracht, wodurch eine Anpresskraft F erzeugt wird, die die Federscheibe 6 auf den bzw. gegen den Mitnehmer 7 presst.

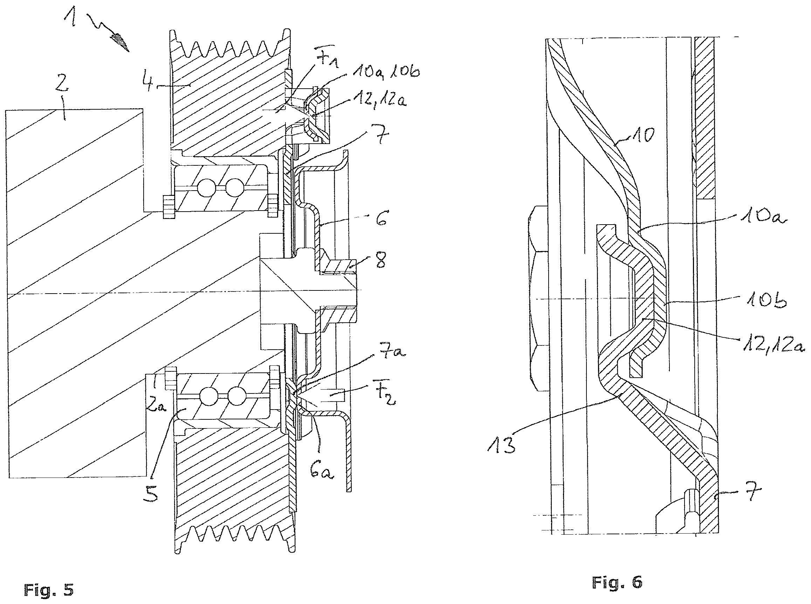

Die Kraft F wird durch die Geometrie und Blechdicke der Federarme 10 die Elastizität des verwendeten Federstahls und die Auslenkung der Federarme 10 bestimmt. Die Federscheibe 6 stützt sich dabei mit einem umlaufenden Vorsprung 6a auf den Mitnehmer 7 ab, wodurch die Federscheibe 6 und der Mitnehmer 7 eine nach außen hin kraftfreie Einheit bilden. Dies ergibt sich aus Figur 5, die Kräfte F1 und F2 sind gleich groß, so dass ein Kräftegleichgewicht besteht. Der Mitnehmer 7 kann zum Kontakt mit dem Vorsprung 6a der Federscheibe 6 am Umfang symmetrisch verteilt mehrere Kontaktflächen 7a aufweisen, die als Auswölbungen ausgebildet sind.

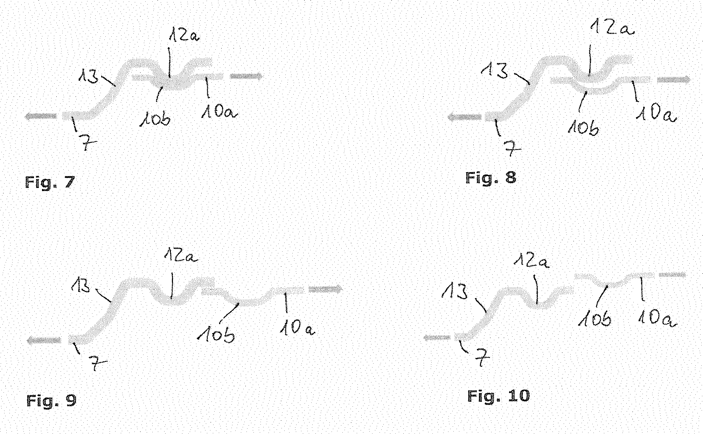

Im Betrieb wird die Riemenscheibe 4 durch den nicht dargestellten Riemen vom Verbrennungsmotor angetrieben. Das dabei erzeugte Drehmoment wird über die Federscheibe 6 und den Mitnehmer 7 übertragen. Über die taschenförmigen Aufnahmen 11 bzw. Stege 13 wird somit eine tangentiale Kraft in die Federscheibe 6 eingeleitet. Die Federscheibe 6 treibt wiederum durch die drehfeste Verbindung über die Mutter 8 die Kompressorwelle 3 an. Wird im Betrieb die Drehung der Kompressorwelle 3 verhindert - z.B. durch eine Fehlfunktion - steigt die auf die Verbindung zwischen der Federscheibe 6 und dem Mitnehmer 7 wirkende Kraft an. Übersteigt die Kraft bzw. das Drehmoment einen vorgegebenen Betrag, können die Federenden 10a aus den taschenförmigen Aufnahmen 11 herausrutschen. Sie gleiten aufeinander ab, bis die Verbindung vollständig gelöst ist. Dieser Ausrückvorgang ist in den Figuren 7 bis 10 dargestellt. Dabei zeigt die Fig. 7 den Ausgangszustand, die Fig. 8 den Beginn des Ausrückens, die Fig. 9 das Ende des Ausrückens und Fig. 10 den entkoppelten Endzustand.

Die maximal übertragbare Kraft wird durch den Kontaktwinkel der Ein- bzw. Auswölbungen 10b, 12a, die Reibkoeffizienten der Kontaktpartner und die Vorspannkraft der Federarme 10 bestimmt.

Die Federarme 10 können nach der vollständigen Trennung vom Mitnehmer 7 in die lastfreie Lage zurückkehren. Da dann die Drehung der Riemenscheibe 4 von der Drehung der Kompressorwelle 3 entkoppelt ist, wird der Riemen der Riemenscheibe 4 nicht durch die Fehlfunktion des Kompressors belastet. Da die Federscheibe 6 und der Mitnehmer 7 getrennt sind und die Federarme 10 axial versetzt zu den taschenförmigen Aufnahmen 11 des Mitnehmers 7 liegen, kann eine freie Drehung des Mitnehmers 7 und somit auch der Riemenscheibe 4 erfolgen.

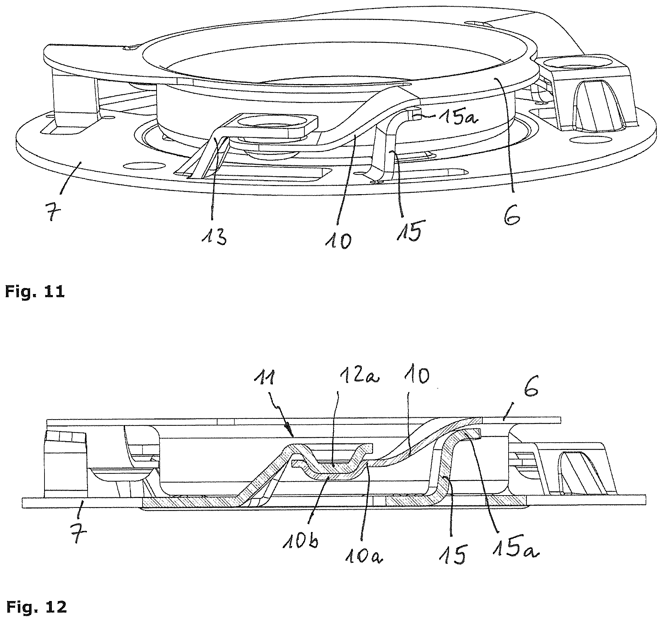

In den Figuren 11 und 12 ist eine zusätzliche Ausgestaltung der Vorrichtung 1 dargestellt, die sich von den zuvor beschriebenen Ausgestaltungen dadurch unterscheidet, dass der scheibenförmige Mitnehmer 7 zusätzlich umfänglich benachbart zum jeweiligen Steg 13 einen zum zugeordneten Federarm 10 gerichteten und an diesem anliegenden Stützarm 15 aufweist. Dieser Stützarm 15 ist dabei, wie zeichnerisch dargestellt, bevorzugt als aus dem Mitnehmer 7 bereichsweise ausgeschnittener Steg ausgebildet, welcher sich in Einbaulage im Wesentlichen axial erstreckt und vorzugsweise im Bereich seines freien Endes 15a bogenförmig abgewinkelt ist, so dass das freie Ende 15a flächig am zugeordneten Federarm 10 anliegt.

Durch geeignete Dimensionierung des Stützarmes 15 lässt sich die Federspannung der Federarme 10 besser regulieren. Außerdem gewährleisten die Stützarme 15 im nicht dargestellten entkoppelten Zustand, bei welchem sich die Enden 10a der Federarme 10 im Sinne der Figuren 11 und 12 oberhalb der taschenförmigen Aufnahmen 11 befinden, dass die Federarme 10 nicht in Kontakt mit dem Mitnehmer 7 kommen können, was ansonsten zu ungewünschten Geräuschen oder dgl. führen könnte.

Natürlich ist die Erfindung nicht auf das dargestellte Ausführungsbeispiel beschränkt. Weitere Ausgestaltungen sind möglich, ohne den Grundgedanken zu verlassen. So kann die Art der drehfesten Verbindung zwischen dem Mitnehmer 7 und der Riemenscheibe 4 sowie zwischen der Federscheibe 6 und der Kompressorwelle 3 auch anders ausgestaltet sein, gleiches gilt auch für die Ein- und Auswölbungen 10b, 12a, die ggf. auch vollständig entfallen können, so dass nur eine kraftschlüssige Verbindung besteht. Außerdem kann auch die Federscheibe 6 fest mit der Riemenscheibe 4 und der Mitnehmer 7 fest mit der Kompressorwelle 3 verbunden sein.

### Bezugszeichenliste

- 1: Vorrichtung
- 2: Kompressorgehäuse
- 2a: Ansatz
- 3: Kompressorwelle
- 4: Riemenscheibe
- 5: Lager
- 6: Federscheibe
- 6a: umlaufender Vorsprung
- 7: Mitnehmer
- 7a: Kontaktflächen
- 8: Mutter
- 9: Schrauben
- 10: Federarme
- 10a: Enden
- 10b: Ein- oder Auswölbung
- 11: taschenförmige Aufnahme
- 12: Anlagefläche
- 12a: Ein- oder Auswölbung
- 13: Stege
- 14: Versteifungen
- 15: Stützarm

## Patentansprüche

1. Vorrichtung zur Übertragung eines Drehmomentes von einem Verbrennungsmotor zu einem Nebenaggregat, insbesondere einem Kompressor einer Klimaanlage eines Kraftfahrzeuges, mit einer Nebenaggregatwelle (3) und einer drehbar auf dem Nebenaggregatgehäuse (2) angeordneten Riemenscheibe (4), wobei die Riemenscheibe (4) und die Nebenaggregatwelle (3) über eine Überlastsicherung miteinander verbunden sind, wobei die Überlastsicherung derart ausgebildet ist, dass die Verbindung zwischen der Riemenscheibe (4) und der Nebenaggregatwelle (3) bei Überschreiten eines vorgegebenen Drehmomentes unterbrochen wird, wobei die Überlastsicherung eine Federscheibe (6) mit mehreren Federarmen (10) aufweist, welche endseitig bis zum Erreichen des vorgegebenen Drehmomentes drehfest mit Verbindungselementen eines scheibenförmigen Mitnehmers (7) verbunden sind,
**dadurch gekennzeichnet,**
**dass** das jeweilige Verbindungselement des Mitnehmers (7) jeweils als taschenförmige Aufnahme (11) im Mitnehmer (7) ausgebildet ist, wobei das Ende (10a) des jeweiligen Federarmes (10) unter Federspannung kraftschlüssig an einer Anlagefläche (12) der taschenförmigen Aufnahme (11) anliegt, wobei die jeweilige taschenförmige Aufnahme (11) als aus dem Mitnehmer (7) bereichsweise ausgeschnittener, hakenförmig geformter Steg (13) ausgebildet ist.

2. Vorrichtung nach Anspruch 1,
**dadurch gekennzeichnet,**
**dass** das Ende (10a) des jeweiligen Federarmes (10) und die jeweilige Anlagefläche (12) aufeinander abgestimmte Formelemente (10b, 12a) aufweisen.

3. Vorrichtung nach Anspruch 2,
**dadurch gekennzeichnet,**
**dass** die Formelemente als Ein- oder Auswölbungen (10b, 12a) ausgebildet sind.

4. Vorrichtung nach Anspruch 1, 2 oder 3,
**dadurch gekennzeichnet,**
**dass** der Steg (13) mit einer zusätzlichen Versteifung (14) versehen ist.

5. Vorrichtung nach Anspruch 1, 2 oder 3,
**dadurch gekennzeichnet,**
**dass** der Steg (13) federnd ausgebildet ist.

6. Vorrichtung nach einem oder mehreren der Ansprüche 1 bis 5,
**dadurch gekennzeichnet,**
**dass** der Mitnehmer (7) umfänglich benachbart zum jeweiligen Steg (13) einen zum zugeordneten Federarm (10) gerichteten und an diesem anliegenden Stützarm (15) aufweist.

7. Vorrichtung nach Anspruch 6,
**dadurch gekennzeichnet,**
**dass** der jeweilige Stützarm als aus dem Mitnehmer (7) bereichsweise ausgeschnittener Steg (15) ausgebildet ist.

8. Vorrichtung nach Anspruch 6 oder 7,
**dadurch gekennzeichnet,**
**dass** der jeweilige Stützarm (15) mit einer zusätzlichen Versteifung versehen ist.

9. Vorrichtung nach einem oder mehreren der Ansprüche 1 bis 8,
**dadurch gekennzeichnet,**
**dass** die Federscheibe (6) wenigstens drei symmetrisch verteilte Federarme (10) aufweist.

10. Vorrichtung nach einem oder mehreren der Ansprüche 1 bis 9,
**dadurch gekennzeichnet,**
**dass** die Federscheibe (6) einen umlaufenden Vorsprung (6a) aufweist, der am Mitnehmer (7) anliegt, solange das vorgegebene Drehmoment nicht überschritten wird.

## Claims

1. Device for transmitting torque from an internal combustion engine to an accessory, in particular a compressor of an air conditioning system of a motor vehicle, with an accessory shaft (3) and a pulley (4) rotatably mounted on the accessory housing (2), wherein the pulley (4) and the accessory shaft (3) are interconnected via an overload protection, wherein the overload protection is designed such that the connection between the pulley (4) and the accessory shaft (3) is interrupted when a predetermined torque is exceeded, wherein the overload protection is a spring washer (6) having a plurality of spring arms (10), which are non-rotatably connected at the ends until the predetermined torque with connecting elements of a disk-shaped driver (7) is attained, **characterised in that** the respective connecting element of the driver (7) in each case is formed as a pocket-shaped receptacle (11) in the driver (7), wherein the end (10a) of the respective spring arm (10) under spring tension is applied frictionally against a contact surface (12) of the pocket-shaped receptacle (11), wherein the respective pocket-shaped receptacle (11) is formed as partially cut out, hook-shaped web (13) from the driver (7).

2. Device according to claim 1, **characterised in that** the end (10a) of the respective spring arm (10) and the respective contact surface (12) have matching mould elements (10b, 12a).

3. Device according to claim 2, **characterised in that** the form elements are formed as concave- or convex bulges (10b, 12a).

4. Device according to claim 1, 2 or 3, **characterised in that** the web (13) is provided with an additional stiffener (14).

5. Device according to claim 1, 2 or 3, **characterised in that** the web (13) is formed resilient.

6. Device according to one or more of claims 1 to 5, **characterised in that** the driver (7) circumferentially adjacent to the respective web (13) has a support arm (15) directed towards the associated spring arm (10) and in contact with the same.

7. Device according to claim 6, **characterised in that** the respective support arm is formed as a web (15) cut out in regions from the driver (7).

8. Device according to claim 6 or 7, **characterised in that** the respective support arm (15) is provided with additional stiffening.

9. Device according to one or several of claims 1 to 8, **characterised in that** the spring washer (6) has at least three symmetrically distributed spring arms (10).

10. Device according to one or several of claims 1 to 9, **characterised in that** the spring washer (6) has a peripheral projection (6a) which lies against the driver (7) as long as the predetermined torque is not exceeded.

## Revendications

1. Dispositif de transmission d'un couple d'un moteur à combustion interne vers un groupe auxiliaire, en particulier un compresseur d'une climatisation d'un véhicule automobile, avec un arbre de groupe auxiliaire (3) et une poulie (4) agencée de manière rotative sur le boîtier de groupe auxiliaire (2), dans lequel la poulie (4) et l'arbre de groupe auxiliaire (3) sont reliés l'un à l'autre par le biais d'une protection contre la surcharge, dans lequel la protection contre la surcharge est réalisée de telle sorte que la liaison entre la poulie (4) et l'arbre de groupe auxiliaire (3) est interrompue lors du dépassement d'un couple prédéfini, dans lequel la protection contre la surcharge présente un disque-ressort (6) avec plusieurs bras de ressort (10), lesquels sont reliés côté extrémité jusqu'à l'atteinte du couple prédéfini de manière solidaire en rotation à des éléments de liaison d'un entraîneur en forme de disque (7),
**caractérisé en ce**
**que** l'élément de liaison respectif de l'entraîneur (7) est réalisé respectivement en tant que logement en forme de poche (11) dans l'entraîneur (7), dans lequel l'extrémité (10a) du bras de ressort (10) respectif s'appuie sous tension de ressort par force sur une surface d'appui (12) du logement en forme de poche (11), dans lequel le logement en forme de poche (11) respectif est réalisé en tant qu'entretoise (13) en forme de crochet, découpée par zone de l'entraîneur (7).

2. Dispositif selon la revendication 1,
**caractérisé en ce**
**que** l'extrémité (10a) du bras de ressort (10) respectif et la surface d'appui (12) respective présentent des éléments formés (10b, 12a) accordés les uns aux autres.

3. Dispositif selon la revendication 2,
**caractérisé en ce**
**que** les éléments formés sont réalisés en tant que bombages concave ou convexe (10b, 12a).

4. Dispositif selon la revendication 1, 2 ou 3,
**caractérisé en ce**
**que** l'entretoise (13) est dotée d'un raidisseur (14) supplémentaire.

5. Dispositif selon la revendication 1, 2 ou 3,
**caractérisé en ce**
**que** l'entretoise (13) est réalisée de manière élastique.

6. Dispositif selon une ou plusieurs des revendications 1 à 5,
**caractérisé en ce**
**que** l'entraîneur (7) présente à la périphérie de manière adjacente à l'entretoise (13) respective un bras de support (15) dirigé vers le bras de ressort (10) associé et s'appuyant sur celui-ci.

7. Dispositif selon la revendication 6,
**caractérisé en ce**
**que** le bras de support respectif est réalisé en tant qu'entretoise (15) découpée par zone de l'entraîneur (7).

8. Dispositif selon la revendication 6 ou 7,
**caractérisé en ce**
**que** le bras de support (15) respectif est doté d'un raidisseur supplémentaire.

9. Dispositif selon une ou plusieurs des revendications 1 à 8,
**caractérisé en ce**
**que** le disque-ressort (6) présente au moins trois bras de ressort (10) distribués de manière symétrique.

10. Dispositif selon une ou plusieurs des revendications 1 à 9,
**caractérisé en ce**
**que** le disque-ressort (6) présente une saillie périphérique (6a), qui s'appuie sur l'entraîneur (7), aussi longtemps que le couple prédéfini n'est pas dépassé.
